# EUROPÄISCHE PATENTANMELDUNG

(11) **EP 4 148 271 A1**
(43) Veröffentlichungstag der Anmeldung: **15.03.2023**
(21) Anmeldenummer: 22193507.5
(22) Anmeldetag: 01.09.2022
(51) Int. Cl.: F03D 80/80

(54) **VERFAHREN ZUR INFRAROTKENNZEICHNUNG EINER WINDKRAFTANLAGE**

(30) Priorität: 13.09.2021 DE 102021123648
(71) Anmelder: Omega-Tools GmbH, 27721 Ritterhude (DE)
(72) Erfinder: Dostalek, Olaf, 27711 Osterholz-Scharmbeck (DE)
(74) Vertreter: Meyer, Ralph

(57) **Zusammenfassung**

Die Erfindung betrifft ein Verfahren zur Infrarotkennzeichnung einer Windkraftanlage mittels wenigstens zwei selbstständig funktionsfähiger Infrarotfeuereinrichtungen 7, 8, welche Abhängigkeit eines jeweiligen Steuergeräts 12 getaktet betrieben werden und synchronisiert werden.

Um eine zuverlässige und dauerhafte Synchronisierung der Taktungen 13 der Infrarotfeuereinrichtungen 7, 8 zu gewährleisten ist erfindungsgemäß vorgesehen, dass eine zentrale Betriebseinheit 9 mit den angeschlossenen Infrarotfeuereinrichtungen 7, 8 mittels Modulation 17 eines jeweiligen elektrischen Trägersignals 18 der Energieversorgungsleitung 11 der betreffenden Infrarotfeuereinrichtung 7, 8 kommuniziert und den Infrarotfeuereinrichtungen 7, 8 eine gemeinsame Taktung 13 vorgibt, indem den elektrischen Trägersignalen 18 ein Synchronpuls 19 aufgeprägt wird.

## Beschreibung

Die Erfindung betrifft ein Verfahren zur Infrarotkennzeichnung einer Windkraftanlage mittels wenigstens zwei selbstständig funktionsfähiger Infrarotfeuereinrichtungen gemäß dem Oberbegriff des Patentanspruchs 1.

Windkraftanlagen müssen wie alle Gebäude oder andere Luftfahrthindernisse abhängig vom Standort ab einer gewissen Höhe mit einer Hindernis- oder Gefahrenbefeuerung gekennzeichnet werden. Vorgaben hierfür enthält die "Allgemeine Verwaltungsvorschrift zur Kennzeichnung von Luftfahrthindernissen". Außerhalb der Betriebszeit der Nachtkennzeichnung mit roter Befeuerung sind weiße Tagesfeuer zu betreiben.

Um die als störend empfundene Nachtbefeuerung auf ein Mindestmaß reduzieren zu können, wurden verschiedene Systeme für bedarfsgerechte Nachtkennzeichnung entwickelt, welche die Befeuerung nur dann einschalten, wenn sich tatsächlich ein Flugzeug in der Nähe befindet. Erfolgt eine bedarfsgerechte Nachtkennzeichnung, so muss die Nachtkennzeichnung mit einer dauerhaft aktivierten Infrarotkennzeichnung versehen werden. Infrarotfeuer können von der zuständigen Luftfahrtbehörde, abhängig von der Hindernissituation, ergänzend zur Nachtkennzeichnung gefordert werden, wenn dies für die sichere Durchführung des Luftverkehrs als notwendig erachtet wird. Infrarotfeuer sind blinkende Rundstrahlfeuer und sind auf dem Dach des Maschinenhauses der Windkraftanlage anzubringen.

Eine Befeuerungsanlage besteht aus je einer Leuchte auf jeder Seite des Maschinenhauses, um die ständige Sichtbarkeit aus jeder Richtung zu gewährleisten. Bei der gattungsgemäßen Infrarotfeuereinrichtung mit wenigstens zwei selbstständig funktionsfähiger Infrarotfeuereinrichtungen ist außerdem Redundanz für den möglichen Ausfall einer der Infrarotfeuereinrichtungen gegeben. Die Infrarotkennzeichnung wird getaktet betrieben, wobei die Infrarotfeuer zu synchronisieren sind. Jede Infrarotfeuereinrichtung hat dabei eine elektrische Energieversorgungsleitung und ein Steuergerät, welches den getakteten Betrieb der Infrarotfeuereinrichtung einstellt. Die vorgegebene Taktfolge, nämlich die für Infrarotkennzeichnung vorgesehene Taktfolge von 0,2 Sekunden hell und 0,8 Sekunden dunkel, wird in jeder Infrarotfeuereinrichtung mit einem ständig verfügbar gehaltenen Signal synchronisiert, beispielsweise einem Zeitmessgeber.

Der vorliegenden Erfindung liegt die Aufgabe zugrunde, ein Verfahren zur Infrarotkennzeichnung einer Windkraftanlage mittels wenigstens zwei selbstständig funktionsfähiger Infrarotfeuereinrichtungen zu schaffen, welches eine zuverlässige und dauerhafte Synchronisierung der Taktungen der Infrarotfeuereinrichtungen gewährleistet.

Diese Aufgabe wird erfindungsgemäß durch ein Verfahren mit den Merkmalen des Patentanspruchs 1 gelöst.

Nach der Erfindung kommuniziert eine zentrale Betriebseinheit mit den angeschlossenen Infrarotfeuereinrichtungen mittels Modulation eines jeweiligen elektrischen Trägersignals der Energieversorgungsleitung der betreffenden Infrarotfeuereinrichtung. Dabei wird den Infrarotfeuereinrichtungen eine gemeinsame Taktung vorgegeben, indem den elektrischen Trägersignalen ein Synchronpuls aufgeprägt wird. Der Synchronpuls ist dabei die Information, welche der für die Infrarotkennzeichnung vorgesehenen Taktfolge entspricht. Dieser Synchronpuls wird den Steuergeräten der angeschlossenen Infrarotfeuereinrichtungen über deren jeweilige Energieversorgungsleitung mitgeteilt und die dem elektrischen Signal in der Energieversorgungsleitung aufgeprägte Information von dem Steuergerät der jeweiligen Infrarotfeuereinrichtung demoduliert. In diesem Betriebsmodus einer Infrarotfeueranlage mit einer zentralen Betriebseinheit und mehreren angeschlossenen Infrarotfeuereinrichtungen wird allen angeschlossenen Infrarotfeuereinrichtungen stets die gleiche Taktfolge vorgegeben. Die Taktfolgen der angeschlossenen Infrarotfeuereinrichtungen sind dabei stets genau synchronisiert.

Die Bestimmung der Taktfolge und Synchronisierung durch eine zentrale Betriebseinheit erfordert keinerlei zusätzliche Verkabelung, da die gewünschte Information den angeschlossenen Infrarotfeuereinrichtungen über deren ohnehin vorhandene Energieversorgungsleitung zugeführt wird. Dadurch ist auch eine "Plug and Play"-Technologie geschaffen, bei der ein Austausch von Infrarotfeuereinrichtungen auf einfachste Weise möglich wird, da das neu angeschlossene Infrarotfeuereinrichtung nach Durchlauf der Protokolle der zentralen Betriebseinheit in den synchronisierten Betrieb integriert wird. Der Synchronpuls wird vorteilhaft am potentialfreien Ausgang der zentralen Betriebseinheit für Peripheriesysteme bereitgestellt, welche den Synchronpuls verarbeiten.

In einer bevorzugten Ausführungsform der Erfindung erfasst jede Infrarotfeuereinrichtung aktuelle Zeitinformation, welche in einem autarken Betriebsmodus der jeweiligen Infrarotfeuereinrichtung zur Synchronisierung herangezogen wird. Wenigstens eine der Infrarotfeuereinrichtungen teilt die erfasste Zeitinformation mittels Modulation des elektrischen Trägersignals in ihrer Energieversorgungsleitung der zentralen Betriebseinheit mit, wobei die zentrale Betriebseinheit auf der Grundlage der Zeitinformation den Synchronpuls bestimmt und den Infrarotfeuereinrichtungen vorgibt. Wenigstens die mitteilende Infrarotfeuereinrichtung ist daher nicht nur zur Demodulierung des Synchronpulses für sämtliche angeschlossenen Geräte ausgebildet, sondern auch zur Modulation der Zeitinformation. Teilt nur eine der angeschlossenen Infrarotfeuereinrichtungen Zeitinformation dem zentralen Betriebsgerät mit, so wird der jeweils anderen Infrarotfeuereinrichtung in einem Master/Slave-Modus eine Taktfolge entsprechend einer fremden Zeitinformation vorgegeben, welche jedoch wie gewünscht synchron mit der Master-Infrarotfeuereinrichtung betrieben wird.

Aufgrund der Mitteilung der Zeitinformation kann auf eine Ausstattung der zentralen Betriebseinheit mit einer entsprechenden Hardware zur Erfassung von Zeitinformation verzichtet werden. Hierfür wird nach der Erfindung die gewünschte Zeitinformation dem zentralen Betriebseinheit mittels Modulation des elektrischen Signals in der Energieversorgungsleitung mitgeteilt. Zugleich kann die Infrarotfeuereinrichtung selbstständig auf der Grundlage der von ihr erfassten Zeitinformation getaktet werden.

Vorteilhaft ermittelt jedes Steuergerät die Taktung bis zum Empfang eines Synchronpulses von der zentralen Betriebseinheit über die elektrische Energieversorgungsleitung aus der jeweils intern erfassten Zeitinformation. Während des Ablaufs des Synchronisierungsprotokolls der zentralen Betriebseinheit wird dadurch eine fortlaufende Infrarotkennzeichnung der Windkraftanlage sichergestellt.

Die Zeitinformation wird in einer Ausführungsform der Erfindung von einem in die Infrarotfeuereinrichtung integrierten Zeitgebers (Timer) bereitgestellt. Der Timer wird dabei benutzt, um einen Impuls von 200 ms entsprechend der gewünschten Taktfolge für Infrarotkennzeichnung zu erzeugen.

Vorteilhaft erfasst die Infrarotfeuereinrichtung extern bereitgestellte Zeitinformation mittels eines Empfängers, so dass jede Infrarotfeuereinrichtung während vorübergehend fehlender Vorgaben durch die zentrale Betriebseinheit über die Gemeinsamkeit des gleichen Zeitsignals synchronisiert werden. Die Zeitinformation wird in einer Ausführungsform der Erfindung aus einer internen Uhr erzeugt, welche ständig mit einem empfangenen Zeitzeichensignal, beispielsweise zur Weltzeit (UTC), abgeglichen wird. Die Taktung für die Infrarotkennzeichnung wird durch einen Sekundenimpuls aus der empfangenen Uhrzeit generiert.

In der bevorzugten Ausführungsform ermittelt die Infrarotfeuereinrichtung die aktuelle Zeitinformation aus einem GPS-Signal. Durch GPS-Zeitvergleiche stehen sehr genaue Zeitinformationen zur Verfügung. Durch die Mitteilungen der GPS-Zeitinformation an die zentrale Betriebseinheit und die erfindungsgemäße Bestimmung eines gemeinsamen Synchronpulses für alle angeschlossenen Infrarotfeuereinrichtungen kann langzeitig die Qualität autarker Synchronisierungen in den jeweiligen Infrarotfeuereinrichtungen über das jeweils empfangene GPS-Signal wesentlich verbessert werden und Synchronität über lange Zeit gewährleistet werden. Ungenauigkeiten von Quarzfrequenzen in verschiedenen Steuergeräten und damit verbundene Abweichungen von der UTC-Zeit sind ausgeschlossen.

In einer weiteren bevorzugten Ausführungsform des erfindungsgemäßen Verfahrens nutzen Infrarotfeuereinrichtungen die kabellose Kommunikation mit der zentralen Betriebseinheit zur Mitteilung von Statusinformation über Modulation des elektrischen Trägersignals in ihrer Energieversorgungsleitung. Dies kann neben dem GPS-Zeitinformation der Betriebszustand einer Heizung oder anderer Bestandteile oder Bausteine des Steuergeräts sein. Die Statusinformation wird in der zentralen Betriebseinheit zur Überwachung der Betriebsfähigkeit der angeschlossenen Infrarotfeuereinrichtungen herangezogen und bei fehlerhaften Betriebszuständen der Fehler angezeigt, beispielsweise ein Error-Signal erzeugt und/oder eine optische Warnung eingeschaltet.

Des Weiteren überwacht die zentrale Betriebseinheit die Energieversorgungsleitung der Infrarotfeuereinrichtungen, beispielsweise durch Messung des Stroms, der durch die Infrarotlichtquelle fließt. Sollte der Strom nicht mehr in einem als korrekt vorgegebenen Bereich gemessen werden, wird auf einen Fehler geschlossen und die für diesen Fall vorgesehenen Maßnahmen eingeleitet, beispielsweise ein Error-Signal erzeugt und/oder eine optische Warnung eingeschaltet. In einer Weiterbildung der Erfindung wird alternativ oder zusätzlich die Betriebsspannung gemessen und bei Detektion von Betriebsspannungen außerhalb eines vorgegebenen Bereichs auf einen Fehler geschlossen werden.

Ein Ausführungsbeispiel der Erfindung ist nachstehend anhand der Zeichnung näher erläutert. Es zeigen:
- Fig. 1: eine Seitenansicht einer Windkraftanlage mit einer Infrarotbefeuerung,
- Fig.2: ein schematisches Schaubild zu einem Ausführungsbeispiel eines Verfahrens zur Infrarotkennzeichnung einer Windkraftanlage.

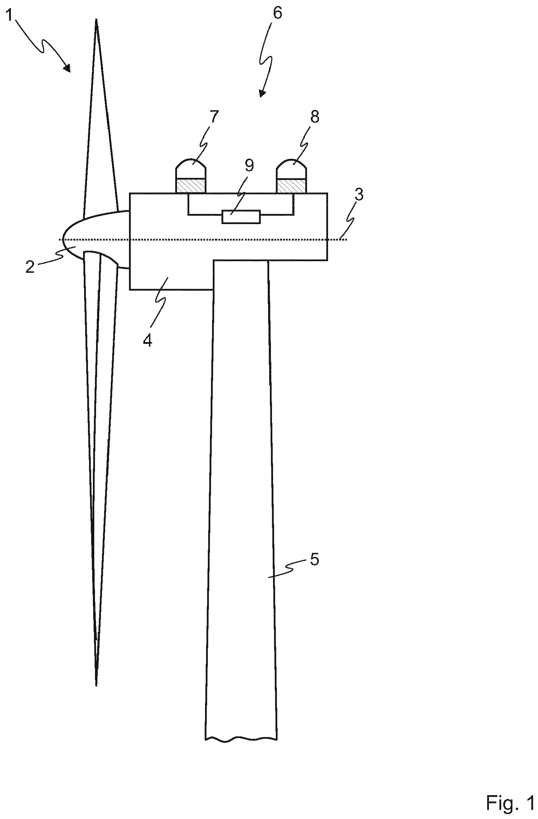

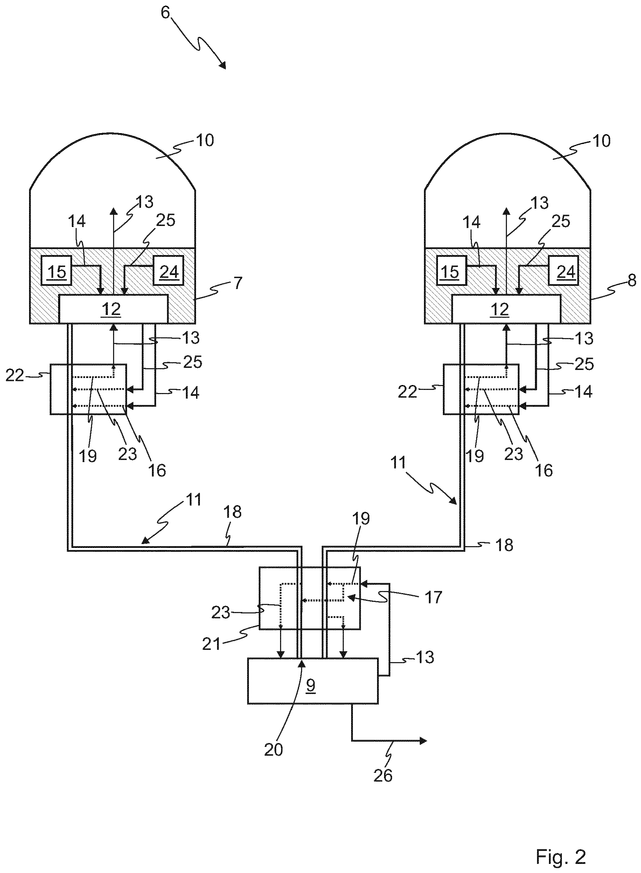

Fig. 1 zeigt die Seitenansicht einer Windkraftanlage 1 mit einem Rotor 2, welcher um eine horizontal liegende Rotorachse 3 drehbar ist. Der Rotor 2 treibt einen Generator an, welcher mit weiteren Elementen der Maschinenanlage in einem Maschinenhaus 4 aufgenommen ist. Das Maschinenhaus 4 ruht drehbar gelagert auf einem Turm 5. Auf dem Dach 6 des Maschinenhauses 4 ist eine Befeuerungsanlage installiert, welche die Windkraftanlage 1 als Lufthindernis kennzeichnet. Von der Befeuerungsanlage ist in Fig. 1 die Infrarotkennzeichnungsanlage 6 gezeigt. Die Infrarotkennzeichnungsanlage 6 umfasst zwei Infrarotfeuereinrichtungen 7, 8 sowie eine zentrale Betriebseinheit 9. Die Infrarotkennzeichnungsanlage 6 ist in Fig. 2 im Schaubild zur Verdeutlichung ihrer Arbeitsweise zur Infrarotkennzeichnung der Windkraftanlage dargestellt.

Jede der Infrarotfeuereinrichtungen 7, 8 ist als Rundfeuer ausgebildet und umfasst eine elektrisch betriebene Infrarotlichtquelle, die unter einer transparenten Kuppel 10 aufgenommen ist. Beide Infrarotfeuereinrichtungen 7, 8 sind mit ihrer jeweiligen elektrischen Energieversorgungsleitung 11 an die zentrale Betriebseinheit 9 angeschlossen. Die Infrarotfeuereinrichtungen 7,8 sind für einen selbständigen Betrieb eingerichtet und umfassen jeweils ein Steuergerät 12, welches die vorgesehenen Taktung 13 mit 0,2 Sekunden hell und 0,8 Sekunden dunkel des Infrarotfeuers einstellt. Das Steuergerät 12 ermittelt aus dem empfangenen GPS-Zeitsignal 14 eines GPS-Empfängers 15 eine Zeitinformation 16, welche im selbstständigen Modus der jeweiligen Infrarotfeuereinrichtung 7,8 der Einstellung der Taktung 13 des Infrarotfeuers zugrunde gelegt wird.

Die CPU der zentralen Betriebseinheit 9 kommuniziert mit den angeschlossenen Infrarotfeuereinrichtungen mittels Modulation 17 eines jeweiligen elektrischen Trägersignals 18 in der Energieversorgungsleitung 11 der betreffenden Infrarotfeuereinrichtung 7, 8 kommuniziert. Sie ist dazu eingerichtet den Infrarotfeuereinrichtungen 7,8 eine gemeinsame Taktung 13 vorzugeben indem den elektrischen Trägersignalen 17 einen Synchronpuls 19 aufprägt. Der Synchronpuls wird am potentialfreien Ausgang 20 der zentralen Betriebseinheit 9 aufgeprägt und dort zum Anschluss von Peripheriesystemen bereitgestellt, welche den Synchronpuls entsprechend ihrer jeweiligen Systemfunktion berücksichtigen oder weiter verarbeiten.

Die Infrarotfeuereinrichtungen 7, 9 teilen ihrerseits die von erfasste Zeitinformation 16 mittels Modulation des elektrischen Trägersignals 17 ihrer Energieversorgungsleitung 11 der zentralen Betriebseinheit 9 mit. Den gemeinsamen Synchronpuls 19 für die angeschlossenen Infrarotfeuereinrichtungen 7,8 bestimmt die zentrale Betriebseinheit 9 auf der Grundlage der aufgeprägten Zeitinformation 16. Für die wechselseitige Kommunikation über die Stromversorgung 11 sind die zentrale Betriebseinheit 9 und die Infrarotfeuereinrichtungen 7,8 zur Modulation und zur Demodulation eingerichtet, das heißt mit einem schematisch dargestellten Modem-Baustein 21, 22. ausgestattet.

Sobald die zentrale Betriebseinheit 9 auf der Grundlage der empfangenen Zeitinformation 16, das heißt den mittels Modulation mitgeteilten GPS-Zeitsignalen 14 der Infrarotfeuereinrichtungen 7,8, nach Durchlauf der Programmprotokolle einen der vorgesehenen Taktung 13 entsprechenden Synchronpuls 19 ermittelt hat, wird dieser jeweils den Trägersignalen 17 der Energieversorgungsleitungen 11 der angeschlossenen Infrarotfeuereinrichtungen 7,8 aufgeprägt und den Infrarotfeuereinrichtungen 7, 8 vorgegeben. Bis zum Empfang einer Taktung 13 über den aufgeprägten Synchronpuls 19 bestimmen die Steuergerät 12 die Taktung 13 bis zum Empfang eines Synchronpulses von der zentralen Betriebseinheit aus der jeweils intern erfassten Zeitinformation. Sobald das Protokoll der zentralen Betriebseinheit 9 durchlaufen ist und diese den Synchronpuls 19 bestimmt und durch Modulation die Taktung vorgibt, werden die angeschlossenen Infrarotfeuereinrichtungen 7,8 präzise synchronisiert.

Mittels Modulation des elektrischen Trägersignals 17 ihrer Energieversorgungsleitungen 11 teilen die Infrarotfeuereinrichtungen 7, 8 der zentralen Betriebseinheit 9 neben der Zeitinformation 16 weitere Statusinformation 23 mit Messwerten mit. Dafür ist beispielhaft eine Heizeinrichtung 24 der Infrarotfeuereinrichtung 7, 8 dargestellt, welche der jeweiligen Steuergerät 12 ihre aktuellen Messwerte 25 zuführt, welche als Statusinformation 23 dem Trägersignal 17 in der Energieversorgungsleitung 11 aufgeprägt wird.

Die zentrale Betriebseinheit 9 zieht die Statusinformation 23 zur Überwachung der Betriebsfähigkeit der angeschlossenen Infrarotfeuereinrichtungen 7, 8 heran. Sobald ein Fehler entdeckt wird, erzeugt die zentrale Betriebseinheit 9 ein auf den Fehler hinweisendes Error-Signal 26. Die Betriebseinheit 9 überwacht auch den Strom, der durch die Infrarotlichtquelle fließt, und/oder die Betriebsspannung der angeschlossenen Infrarotfeuereinrichtungen 7, 8. Soweit die entsprechenden Informationen nicht unmittelbar an der zentralen Betriebseinheit 9 erfasst werden können, werden entsprechende Messwerte an den entsprechenden Einrichtungen der Infrarotfeuereinrichtungen 7, 8, insbesondere der Infrarotlichtquelle, aufgenommen. Die aufgenommenen Messwerte können als Statusinformation 23 mittels Modulation der zentralen Betriebseinheit 9 kommuniziert werden.

### Bezugszeichenliste (Bestandteil der Beschreibung)

- 1: Windkraftanlage
- 2: Rotor
- 3: Rotorachse
- 4: Maschinenhaus
- 5: Turm
- 6: Infrarotkennzeichnungsanlage
- 7: Infrarotfeuereinrichtung
- 8: Infrarotfeuereinrichtung
- 9: Zentrale Betriebseinheit
- 10: Kuppel
- 11: Energieversorgungsleitung
- 12: Steuergerät
- 13: Taktung
- 14: GPS-Zeitsignal
- 15: GPS-Empfänger
- 16: Zeitinformation
- 17: Modulation
- 18: Trägersignal
- 19: Synchronpuls
- 20: Potentialfreier Ausgang
- 21: Modem-Baustein
- 22: Modem-Baustein
- 23: Statusinformation
- 24: Heizeinrichtung
- 25: Messwerte
- 26: Error-Signal

## Patentansprüche

1. Verfahren zur Infrarotkennzeichnung einer Windkraftanlage (1) mittels wenigstens zwei selbstständig funktionsfähiger Infrarotfeuereinrichtungen (7, 8), welche Abhängigkeit eines jeweiligen Steuergeräts (12) getaktet betrieben werden und synchronisiert werden, **dadurch gekennzeichnet, dass** eine zentrale Betriebseinheit (9) mit den angeschlossenen Infrarotfeuereinrichtungen (7, 8) mittels Modulation (17) eines jeweiligen elektrischen Trägersignals (18) in der Energieversorgungsleitung (11) der betreffenden Infrarotfeuereinrichtung (7, 8) kommuniziert und den Infrarotfeuereinrichtungen (7, 8) eine gemeinsame Taktung (13) vorgibt, indem den elektrischen Trägersignalen (18) ein Synchronpuls (19) aufgeprägt wird.

2. Verfahren nach Anspruch 1, **dadurch gekennzeichnet, dass** jede Infrarotfeuereinrichtung (7, 8) aktuelle Zeitinformation (16) erfasst und wenigstens eine der Infrarotfeuereinrichtungen (7, 8) die erfasste Zeitinformation (16) mittels Modulation des elektrischen Trägersignals (18) ihrer Energieversorgungsleitung (11) der zentralen Betriebseinheit (9) mitteilt, wobei die zentrale Betriebseinheit (9) auf der Grundlage der Zeitinformation (16) den Synchronpuls (19) bestimmt und den Infrarotfeuereinrichtungen (7, 8) vorgibt.

3. Verfahren nach Anspruch 1 oder 2, **dadurch gekennzeichnet, dass** jedes Steuergerät (12) die Taktung (13) bis zum Empfang eines Synchronpulses (19) von der zentralen Betriebseinheit (19) über die elektrische Energieversorgungsleitung (11) aus der jeweils erfassten Zeitinformation (16) ermittelt.

4. Verfahren nach Anspruch 2 oder 3, **dadurch gekennzeichnet, dass** die Infrarotfeuereinrichtung (7, 8) mittels eines Empfängers (15) extern bereit gestellte Zeitinformation (16) erfasst.

5. Verfahren nach einem der Ansprüche 2 bis 4, **dadurch gekennzeichnet, dass** die aktuelle Zeitinformation (16) aus einem GPS-Signal (14) ermittelt wird.

6. Verfahren nach einem der vorhergehenden Ansprüche, **dadurch gekennzeichnet, dass** der Synchronpuls (19) am potentialfreien Ausgang (20) der zentralen Betriebseinheit (9) für Peripheriesysteme bereitgestellt wird.

7. Verfahren nach einem der vorhergehenden Ansprüche, **dadurch gekennzeichnet, dass** die Infrarotfeuereinrichtungen (7, 8) Statusinformation (23) über Modulation des elektrischen Trägersignals (17) ihrer Energieversorgungsleitung (11) der zentralen Betriebseinheit (9) mitteilen.
